# DEMANDE DE BREVET EUROPEEN

(11) **EP 4 207 450 A1**
(43) Date de publication de la demande: **05.07.2023**
(21) Numéro de dépôt: 21306950.3
(22) Date de dépôt: 29.12.2021
(51) Int. Cl.: H01M 50/207, H01M 50/224, H01M 50/249, H01M 50/262, H01M 50/276, H01M 50/296, H01M 50/298, H01M 50/502, H01M 50/514, H01M 50/522, H01M 50/545

(54) **CELLULES STRUCTURELLEMENT ANALOGUES, COMPRENANT DES EMPILEMENTS ÉLECTROCHIMIQUES ET IMBRIQUÉES L UNE DANS L AUTRE SUCCESSIVEMENT**

(71) Demandeur: Automotive Cells Company SE, 92300 Levallois Perret (FR)
(72) Inventeur: QUEYRENS, Mathieu, 33910 SAINT-DENIS-DE-PILE (FR); DE ROLAND, Geoffroy, 33520 BRUGES (FR); LAATIAOUI, Najib, 33130 BEGLES (FR)
(74) Mandataire: Lavoix

(57) **Abrégé**

Ensemble (10) comprenant une pluralité de cellules (12, 14, 16) structurellement analogues et adaptées pour être imbriquées successivement dans une direction d'imbrication (D), chacune des cellules comprenant :
- un empilement électrochimique (18), et
- un boîtier (24) comprenant un corps (26) conducteur définissant un premier logement (28) adapté pour recevoir l'empilement électrochimique (18), et un couvercle (32),
- un premier élément isolant (36) pour isoler électriquement du corps au moins une portion (38) conductrice du couvercle.

Chacune des cellules forme un deuxième logement (44) ouvert pour recevoir une autre des cellules selon la direction d'imbrication et pour empêcher un glissement d'un fond de l'autre cellule par rapport à ladite portion perpendiculairement à la direction d'imbrication. Chacune des cellules comprend au moins un deuxième élément isolant (40) adapté pour empêcher un contact électrique entre ledit fond (42) et un rebord (34) du corps.

## Description

La présente invention concerne un ensemble comprenant une pluralité de cellules comprenant respectivement des empilements électrochimiques.

L'invention concerne aussi un procédé d'obtention d'un tel ensemble et une utilisation d'un tel ensemble.

L'invention s'applique en particulier à la réalisation d'une batterie, notamment de véhicule électrique. On entend par « batterie » une pluralité de cellules électrochimiques reliées électriquement les unes aux autres. Selon un exemple particulier de batterie, la pluralité de cellules électrochimiques est agencée sous la forme d'un ou plusieurs module(s), chaque module comprenant plusieurs cellules électrochimiques raccordées électriquement les unes aux autres et assemblées mécaniquement les unes aux autres par un système d'assemblage, tel que des plaques d'assemblage. Une cellule électrochimique comprend, en particulier, un empilement d'électrodes positives reliées les unes aux autres, et un empilement d'électrodes négatives reliées les unes aux autres, séparées par un séparateur, connus sous le terme de « stack ». Les électrodes positives reliées les unes aux autres forment une borne positive, et les électrodes négatives reliées les unes aux autres forment une borne négative.

Il est connu de placer les empilements électrochimiques (les « stacks ») respectivement dans des boîtiers pour former les cellules.

Pour assurer la solidité de l'assemblage, il est connu de relier les bornes des empilements électrochimiques les unes aux autres par des pièces de connexion soudées sur les cellules. Les pièces de connexion sont des éléments métalliques emboutis.

Toutefois, l'assemblage par soudure nécessite des équipements relativement coûteux et un contrôle de l'atmosphère autour de la zone de soudure. L'assemblage par soudure génère aussi un point chaud et des projections solides et gazeuses. En pratique, un ensemble déjà complètement assemblé est livré à son futur utilisateur, par exemple un constructeur automobile. Dit autrement, les soudures sont réalisées en amont de la livraison de l'ensemble.

Enfin, si l'on souhaite recycler l'ensemble après usage, un démontage non destructif n'est pas possible ou s'avère très complexe, ce démontage pouvant en outre endommager les éléments sur lesquels les pièces de connexion étaient soudées.

Comme on le comprendra, ces aspects ont un impact négatif sur le coût complet de la production et du recyclage éventuel de ces ensembles.

Un but de l'invention est donc de fournir un ensemble permettant, par ses caractéristiques techniques, de réduire ce coût complet.

A cet effet, l'invention a pour objet un ensemble comprenant une pluralité de cellules structurellement analogues les unes aux autres et adaptées pour être imbriquées l'une dans l'autre successivement dans une direction d'imbrication, chacune des cellules comprenant :
- un empilement électrochimique comportant un premier pôle et un deuxième pôle,
- un boîtier comprenant un corps électriquement conducteur définissant un premier logement adapté pour recevoir l'empilement électrochimique dans la direction d'imbrication et définissant une ouverture de passage pour l'empilement électrochimique vers le premier logement, le boîtier comprenant en outre un couvercle retenu par un rebord du corps pour obturer au moins partiellement l'ouverture de passage, et
- au moins un premier élément isolant adapté pour isoler électriquement du corps au moins une portion électriquement conductrice du couvercle,

le premier pôle et le deuxième pôle étant reliés électriquement au corps et à ladite portion respectivement,
chacune des cellules formant un deuxième logement ouvert adapté pour recevoir une autre des cellules selon la direction d'imbrication dans une position insérée, dans laquelle un fond du corps de l'autre des cellules bute contre et est en contact électrique avec ladite portion du couvercle de ladite chacune des cellules, le deuxième logement étant adapté pour empêcher un glissement dudit fond par rapport à ladite portion dans toute direction perpendiculaire à la direction d'imbrication,
chacune des cellules comprenant en outre au moins un deuxième élément isolant adapté pour empêcher un contact électrique entre ledit fond et le rebord.

Selon des modes particuliers de réalisation, l'ensemble comprend l'une ou plusieurs des caractéristiques suivantes, prise(s) isolément ou selon toutes les combinaisons techniquement possibles :
- le boîtier présente une forme générale parallélépipédique ;
- le corps est au moins quatre fois plus étendu que le couvercle dans la direction d'imbrication ;
- le corps comprend des parois latérales reliant le rebord au fond, le rebord comprenant une première partie et une deuxième partie, la première partie reliant les parois latérales à la deuxième partie en formant un épaulement dans la direction d'imbrication ;
- le couvercle forme un bord relevé s'étendant parallèlement à la deuxième partie ;
- le couvercle comprend ladite portion électriquement conductrice, une autre portion située dans le prolongement de ladite portion électriquement conductrice perpendiculairement à la direction d'imbrication, et le bord relevé, le premier élément isolant s'étendant entre la portion électriquement conductrice et l'autre portion ;
- le bord relevé du couvercle est soudé sur le rebord ;
- le deuxième élément isolant comprend, en section perpendiculairement au rebord, une partie en « L » disposée entre, d'une part, l'autre portion du couvercle et le bord relevé et, d'autre part, le corps de l'autre des cellules ;
- le deuxième élément isolant, en section perpendiculairement au rebord, recouvre une extrémité du bord relevé du couvercle, et une extrémité de la deuxième partie du rebord dans la direction d'imbrication ;
- le rebord comprend, en section perpendiculairement au rebord, une troisième partie en « L », la base du « L » étant fixée sur la deuxième partie, la hampe du « L » s'étendant entre le bord relevé du couvercle et le corps de ladite autre des cellules, la deuxième partie et la troisième partie encapsulant le bord relevé et le premier élément isolant ;
- le deuxième élément isolant est venu de matière avec le premier élément isolant ;
- le deuxième élément isolant comprend, en section perpendiculairement au rebord: une première portion recouvrant au moins partiellement la base du « L » formé par la troisième partie du rebord ; et une deuxième portion s'étendant entre la hampe du « L » formé par la troisième partie du rebord et le corps de ladite autre des cellules ; et
- en section perpendiculairement au rebord, le premier élément isolant comprend successivement une première portion s'étendant entre la première partie du rebord et la portion principale du couvercle, une deuxième portion s'étendant entre la deuxième partie du rebord et le bord relevé du couvercle, et une troisième portion s'étendant entre la troisième partie du rebord et le bord relevé.

L'invention a aussi pour objet un procédé d'obtention d'un ensemble tel que décrit ci-dessus, comprenant les étapes suivantes :
- pour chacune des cellules, réception de l'empilement électrochimique dans le premier logement, et raccordement du premier pôle et du deuxième pôle électriquement au corps et à ladite portion du couvercle respectivement,
- pour chacune des cellules, rétention du couvercle par le rebord, obturation au moins partielle de l'ouverture de passage par le couvercle, et mise en place du deuxième élément isolant, et
- imbrication des cellules l'une dans l'autre successivement dans la direction d'imbrication, le fond du corps d'une des cellules butant contre et étant en contact électrique avec ladite portion du couvercle d'une autre des cellules, le deuxième logement de l'autre des cellules empêchant un glissement dudit fond de ladite une des cellules par rapport à ladite portion du couvercle de l'autre des cellules dans toute direction perpendiculaire à la direction d'imbrication.

L'invention a également pour objet une utilisation d'un ensemble tel que décrit ci-dessus, dans laquelle une pression mécanique comprise entre 0,5 et 3,0 bar est appliquée sur l'ensemble dans la direction d'imbrication pour maintenir une cohésion de l'ensemble.

L'invention sera mieux comprise à la lecture de la description qui va suivre, donnée uniquement à titre d'exemple et faite en se référant aux dessins annexés, sur lesquels :
- la figure 1 est une vue en coupe d'un ensemble selon un premier mode de réalisation de l'invention, la coupe étant réalisée selon un premier plan médian parallèle à la direction d'imbrication et s'étendant dans le sens de la longueur des boîtiers,
- la figure 2 est une vue en perspective et en coupe d'une partie de l'ensemble représenté sur la figure 1, la coupe étant réalisée selon un deuxième plan médian parallèle à la direction d'imbrication et s'étendant dans le sens de la largeur des boîtiers, seules deux cellules étant représentées sans leurs empilements électrochimiques,
- la figure 3 est une vue de détail de la figure 2, centrée sur le rebord du corps d'un des boîtiers représentés sur les figures 1 et 2, et
- les figures 4 à 6 sont des vues analogues à celles des figures 1 à 3 respectivement, portant sur un ensemble selon un deuxième mode de réalisation de l'invention.

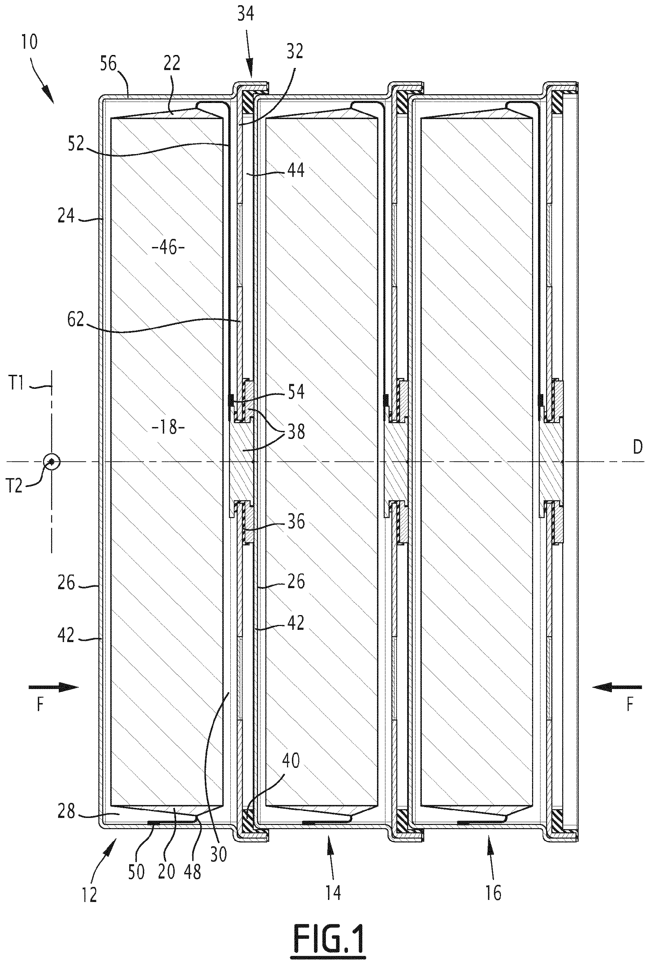

En références aux figures 1 à 3, on décrit un ensemble 10 selon un premier mode de réalisation de l'invention.

L'ensemble 10 comprend une pluralité de cellules 12, 14, 16 imbriquées l'une dans l'autre successivement dans une direction d'imbrication D. La cellule 16 est reçue dans la cellule 14, qui est reçue dans la cellule 12.

Les cellules 12, 14, 16 sont structurellement analogues, de préférence identiques, les unes aux autres, aussi seule la cellule 12 sera décrite ci-après.

La cellule 12 comprend un empilement électrochimique 18 (ou « stack ») comportant un premier pôle 20 (ou borne) et un deuxième pôle 22. La cellule 12 comprend un boîtier 24 comprenant un corps 26 électriquement conducteur définissant un premier logement 28 adapté pour recevoir l'empilement électrochimique 18 à travers une ouverture de passage 30, et un couvercle 32 retenu par un rebord 34 du corps et obturant au moins partiellement l'ouverture de passage.

La cellule 12 comprend aussi un premier élément isolant 36 adapté pour isoler électriquement du corps 26 au moins une portion 38 du couvercle 32 électriquement conductrice, et un deuxième élément isolant 40 adapté pour empêcher un contact électrique entre un fond 42 du corps 26 de la cellule 14 et le rebord de la cellule 12.

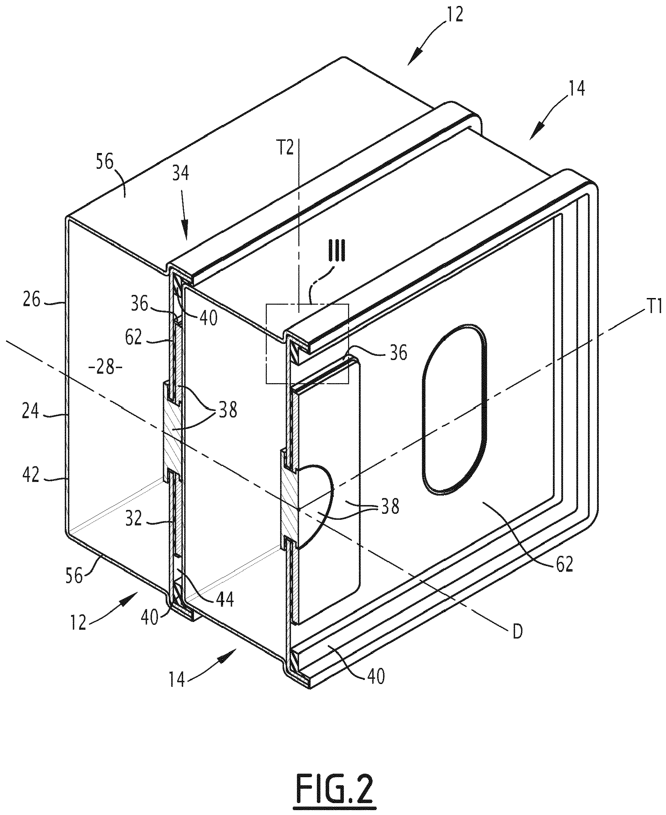

La cellule 12 forme aussi un deuxième logement 44 ouvert adapté pour recevoir la cellule 14 selon la direction d'imbrication D dans une position insérée représentée sur les figures 1 et 2.

La position non insérée (non représentée) se déduit de la position insérée en éloignant la cellule 14 de la cellule 12 dans la direction d'imbrication D.

Dans l'exemple, l'empilement électrochimique 18 et le boîtier 24 présentent une forme générale parallélépipédique.

L'empilement électrochimique 18 comprend une partie principale 46, par exemple parallélépipédique, le premier pôle 20 étant relié électriquement au corps 26 du boîtier 24, et le deuxième pôle 22 étant relié électriquement à la portion 38 du couvercle 32.

Comme visible sur la figure 1, le premier pôle 20 et le deuxième pôle 22 sont par exemple situés de part et d'autre de la partie principale 46 selon une première direction transversale T1 perpendiculaire à la direction d'imbrication D.

On définit également une deuxième direction transversale T2 perpendiculaire à la direction d'imbrication D et à la première direction transversale T1.

Le premier pôle 20 est par exemple relié au corps 26 par un fil conducteur 48 et une soudure 50 réalisée sur le corps.

Le deuxième pôle 22 est par exemple relié à la portion 38 du couvercle 32 par un fil 52 conducteur et une soudure 54 réalisée sur la portion 38 du couvercle 32.

Lorsque le couvercle 32 n'est pas en position d'obturation, le corps 26 définit l'ouverture de passage 30, qui est adaptée pour permettre une insertion de l'empilement électrochimique 18 dans le premier logement 28 dans la direction d'imbrication D.

Dans l'exemple, le corps 26 est au moins quatre fois plus étendu que le couvercle 32 dans la direction d'imbrication D.

Le corps 26 et le couvercle 32 sont par exemple réalisés en tout matériau électriquement conducteur, par exemple en aluminium.

Dans le présent document, un élément est considéré comme électriquement conducteur si sa conductivité électrique est par exemple supérieure à 0,7.10⁶ S·m⁻¹ à 25°C.

Le corps 26 comporte des parois latérales 56, par exemple parallèles à la direction d'imbrication D, qui relient le fond 42 au rebord 34.

Le fond 42 s'étend par exemple perpendiculairement à la direction d'imbrication D.

Le rebord 34 forme avantageusement une saillie à partir des parois latérales 56 perpendiculairement à la direction d'imbrication D. Avantageusement, le rebord 34 forme une boucle continue autour de la direction d'imbrication D.

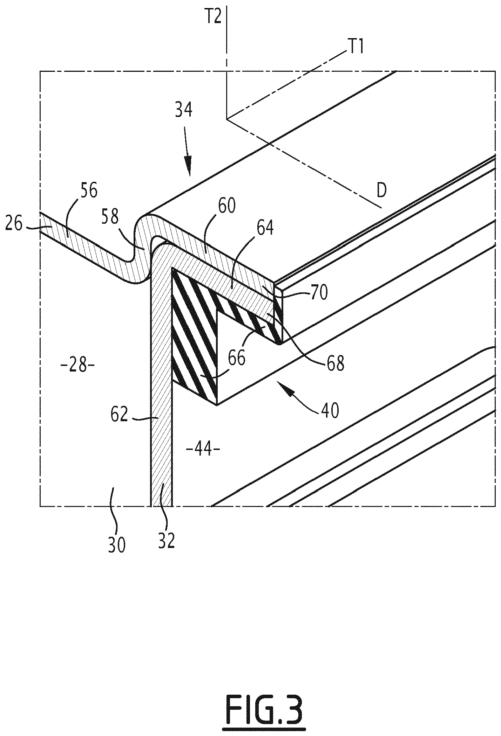

Dans le premier mode de réalisation, le rebord 34 (figure 3) est constitué par une première partie 58 et une deuxième partie 60, la première partie reliant les parois latérales 56 à la deuxième partie en formant un épaulement dans la direction d'imbrication D.

La première partie 58 s'étend par exemple perpendiculairement à la direction d'imbrication D, et la deuxième partie 60 s'étend parallèlement à cette direction.

Dans le premier mode de réalisation, le couvercle 32 comprend ladite portion 38 électriquement conductrice, une autre portion 62 située dans le prolongement de ladite portion 38 électriquement conductrice perpendiculairement à la direction d'imbrication D, et un bord relevé 64, le premier élément isolant 36 s'étendant entre la portion 38 électriquement conductrice et l'autre portion 62 de manière à les isoler électriquement l'une de l'autre.

Dans le présent document, un élément est considéré comme électriquement isolant si sa conductivité électrique est par exemple inférieure à 1,0 S·m⁻¹ à 25°C.

L'autre portion 62 entoure la portion 38 du couvercle électriquement conductrice autour de la direction d'imbrication D. Dans l'exemple, l'autre portion 62 est également électriquement conductrice.

Le bord relevé 64 est avantageusement soudé sur le rebord 34, par exemple sur la deuxième partie 60. Le bord relevé 64 s'étend par exemple parallèlement à la deuxième partie 60 du rebord 34.

Le deuxième élément isolant 40 comprend, en section perpendiculairement au rebord 34, une partie 66 en « L » disposée entre, d'un côté, l'autre portion 62 du couvercle 32 et le bord relevé 64 et, de l'autre côté, le corps 26 de la cellule 14.

Le deuxième élément isolant 40, en section perpendiculairement au rebord 34, recouvre avantageusement une extrémité 68 du bord relevé 64, et une extrémité 70 de la deuxième partie 60 du rebord 34.

Dans la position insérée, le fond 42 du corps 26 de la cellule 14 est adapté pour buter contre, et être en contact électrique avec la portion 38 du couvercle 32 de la cellule 12, le deuxième logement 44 étant adapté pour empêcher un glissement dudit fond 42 par rapport à ladite portion 38 dans toute direction perpendiculaire à la direction d'imbrication D.

Outre sa fonction sa fonction d'isolation électrique, le deuxième élément isolant 40 est avantageusement configuré pour caler la cellule 14 dans le deuxième logement 44 formé par la cellule 12.

On va maintenant décrire un procédé d'obtention de l'ensemble 10.

Pour chacune des cellules 12, 14, 16, l'empilement électrochimique 18 est reçu dans le premier logement 28, et le premier pôle 20 et du deuxième pôle 22 sont raccordés électriquement au corps 26 et à ladite portion 38 du couvercle 32 respectivement.

Le couvercle 32 est soudé sur le corps 26. Le couvercle 32 est donc retenu par le rebord 34 et obture l'ouverture de passage 30.

Dans l'exemple, l'obturation est totale.

Selon des variantes non représentées, l'obturation est partielle. Dit autrement, le boîtier 24 présente des ouvertures.

Puis, le deuxième élément isolant 40 est mis en place. En variante, le deuxième élément isolant 40 est déjà en place sur le couvercle 32.

Ensuite, les cellules 12, 14, 16 sont imbriquées l'une dans l'autre successivement dans la direction d'imbrication D. Le fond 42 du corps 26 de la cellule 14 butte contre la portion 38 du couvercle 32 de la cellule 12 , et est en contact électrique avec la portion 38. Le deuxième logement 44 de la cellule 12 empêche un glissement dudit fond 42 de la cellule 14 par rapport à la portion 38 du couvercle 32 de la cellule 12 dans toute direction perpendiculaire à la direction d'imbrication D.

On procède de même avec les cellules 16 et 14 pour les imbriquer dans la direction d'imbrication D.

Lors de l'utilisation de l'ensemble 10, une pression mécanique, symbolisée par des flèches F sur la figure 1, est appliquée sur l'ensemble dans la direction d'imbrication D pour maintenir une cohésion de l'ensemble.

La pression F est par exemple comprise entre 0,5 et 3,0 bar, par exemple entre 1,0 et 2,0 bar.

La pression F est par exemple appliquée en plaçant l'ensemble 10 entre au moins deux éléments (non représentés) adaptés pour appliquer une telle pression et pour recueillir l'électricité délivrée par l'ensemble.

Le fonctionnement de l'ensemble 10 se déduit de sa structure et va maintenant être brièvement décrit.

Lorsque que les cellules 12, 14, 16 sont imbriquées, le fond 42 du corps 26 de la cellule 12 forme un premier pôle général, par exemple négatif, de l'ensemble 10. Le premier pôle 20 de l'empilement électrochimique 18 de la cellule 12 est reliée électriquement à ce premier pôle général.

Le deuxième pôle 22 de l'empilement électrochimique de la cellule 12 est relié à la portion 38 du couvercle 32 de la cellule 12, lui-même en contact électrique avec le fond 42 du corps 26 de la cellule 14. Comme le fond 42 du corps 26 de la cellule 14 est relié au premier pôle 20 de l'empilement électrochimique 18 de la cellule 14, l'empilement électrochimique 18 de la cellule 12 est donc connecté en série avec l'empilement électrochimique 18 de la cellule 14.

De même, l'empilement électrochimique 18 de la cellule 14 est connecté en série avec celui de la cellule 16.

La portion 38 du couvercle 32 de la cellule 16 forme un deuxième pôle général, par exemple positif, de l'ensemble 10.

Le premier isolant 36 et le deuxième isolant 40 empêchent un court-circuit entre le corps 26 de la cellule 14 et celui des cellules 12 et 16.

Avantageusement, le deuxième élément isolant 40 cale mécaniquement le fond 42 de la cellule 14 dans le deuxième logement 44 de la cellule 12, et le fond 26 de la cellule 16 dans le deuxième logement 44 de la cellule 14.

Grâce aux caractéristiques décrites ci-dessus, il est très facile de démonter l'ensemble 10 en séparant les cellules 12, 14, 16 les unes des autres dans la direction d'imbrication D, sans démanteler les cellules. En particulier, dans chaque cellule, le couvercle 32 n'est pas séparé du corps 26, et de ce fait aucune pièce des cellules n'est endommagée. L'ensemble 10 permet donc, par ses caractéristiques techniques, de réduire le coût complet mentionné plus haut.

L'ensemble 10 permet une connexion électrique simplifiée, par empilement des cellules 12, 14, 16 dans la direction d'imbrication D.

L'ensemble 10 permet une modularité jusqu'à un stade avancé de son assemblage. En effet, alors que les batteries des ensembles de l'état de la technique sont soudées entre elles très en amont, les cellules 12, 14, 16 de l'ensemble 10 peuvent être assemblées au dernier moment, juste avant l'intégration de l'ensemble 10, par exemple dans un véhicule (non représenté) par exemple.

En outre, l'assemblage des cellules 12, 14, 16 s'effectue sans point chaud, et sans projections solides ou gazeuses.

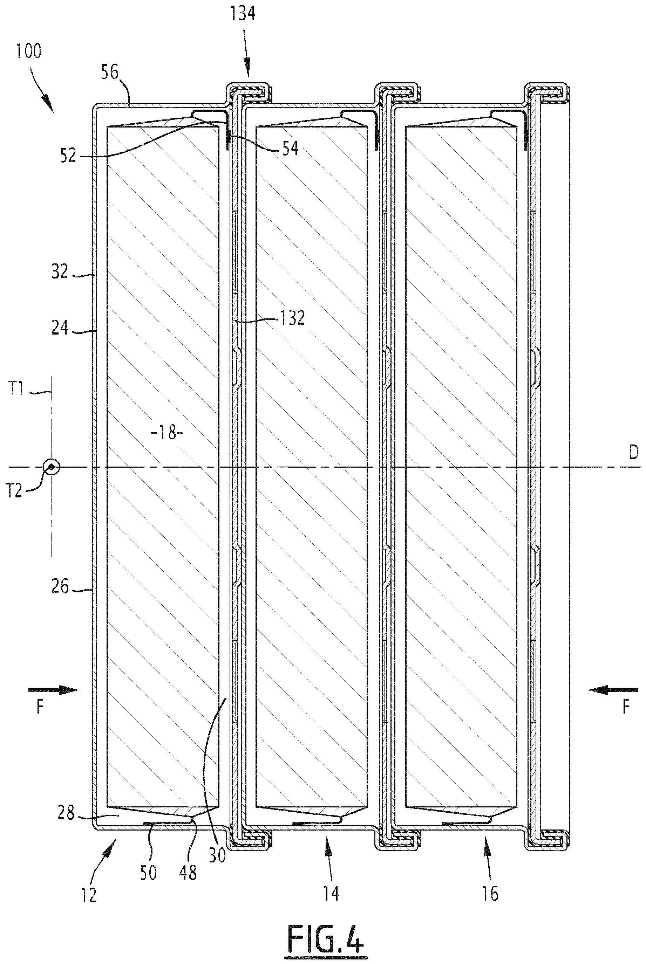

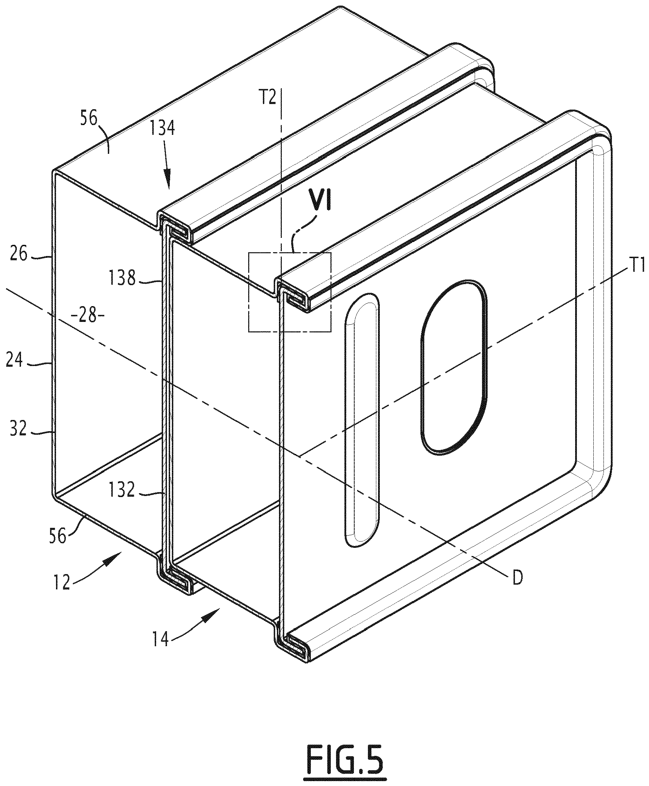

En référence aux figures 4 à 6, on décrit un ensemble 100 selon un deuxième mode de réalisation de l'invention.

L'ensemble 100 est analogue à l'ensemble 10 représenté sur les figures 1 à 3. Les éléments similaires portent les mêmes références numériques et ne seront pas décrits à nouveau. Seules les différences seront décrites en détail ci-après.

Dans l'ensemble 100, le corps 26 des cellules 12, 14, 16 comporte un rebord 134 de forme plus complexe, adapté pour retenir un couvercle 132, sans fixation directe telle qu'une soudure.

Dans l'ensemble 100, la portion 138 du couvercle qui est isolée électriquement du corps 26 par un premier élément isolant 136 est en fait tout le couvercle 132. Dit autrement, le premier élément isolant 136 est adapté pour isoler électriquement du corps 26 tout le couvercle 132. On comprend donc que le couvercle 132 ne soit pas soudé sur le rebord 134.

Ces différences ont aussi des conséquences sur la structure des éléments isolants 136, 140.

Le rebord 134 comprend, en section perpendiculairement au rebord, une troisième partie 162 en « L ».

La base 164 du « L » est fixée sur la deuxième partie 60.

La hampe 166 du « L » s'étend entre le bord relevé 64 du couvercle 132 et le corps 26 de la cellule 14.

La deuxième partie 60 et la troisième partie 162 encapsulent le bord relevé 64 du couvercle 132 et le premier élément isolant 136, de manière à empêcher le couvercle 132 de s'éloigner du corps 26 de la cellule 12 selon la direction d'imbrication D.

Outre le bord relevé 64, le couvercle 132 comprend une portion principale 168 s'étendant par exemple perpendiculairement à la direction d'imbrication D.

En section perpendiculairement au rebord 134, le premier élément isolant 136 comprend successivement une première portion 170 s'étendant entre la première partie 58 du rebord 134 et la portion principale 168 du couvercle 132, une deuxième portion 172 s'étendant entre la deuxième partie 60 du rebord 134 et le bord relevé 64 du couvercle 132, et une troisième portion 174 s'étendant entre la troisième partie 162 du rebord 134 et le bord relevé 64.

La troisième portion 174 est par exemple en « L ».

Le deuxième élément isolant 140 comprend par exemple une première portion 176 recouvrant au moins partiellement la base 164 du « L » formé par la troisième partie 162 du rebord 134, et une deuxième portion 178 s'étendant entre la hampe 166 du « L » formé par la troisième partie 162 du rebord 134 et le corps 26 de la cellule 14.

Le deuxième élément isolant 140 est avantageusement venu de matière avec le premier élément isolant 136. Par exemple, le deuxième élément isolant 140 comprend une troisième portion 180 reliant sa deuxième portion 178 à la troisième portion 174 du premier élément isolant 136. Dit autrement, le premier élément isolant 136 et le deuxième élément isolant 140 forment un seul élément isolant entortillé dans le rebord 134 et sur le rebord 134 pour isoler électriquement le couvercle 132 du corps 26 dans la cellule 12, et pour isoler électriquement le corps 26 de la cellule 14 du rebord 134 de la cellule 12.

L'ensemble 100 s'obtient de manière analogue à l'ensemble 100, si ce n'est que, dans chacune des cellules 12, 14, 16, le couvercle 132 n'est pas soudé sur le rebord 134, mais retenu par encapsulation.

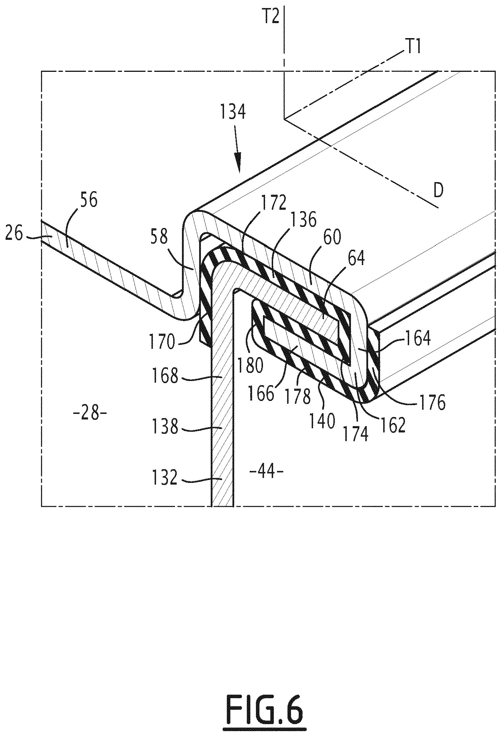

La troisième partie 162 du rebord 134 est par exemple initialement dans une configuration dépliée (non représentée, mais se déduisant de la configuration pliée représentée sur la figure 6 en dépliant le rebord), dans laquelle le couvercle 132 est déplacé pour être mis dans sa position d'obturation. Puis la troisième partie 162 du rebord 134 est mise dans une configuration pliée visible sur la figure 6, dans laquelle la troisième partie 62 bloque le couvercle 132 dans sa position d'obturation.

L'ensemble 100 fonctionne de manière analogue à celle de l'ensemble 10, si ce n'est que le deuxième élément isolant 140 ne cale le corps 26 de la cellule 14 dans le deuxième logement 44 de la cellule 12 que perpendiculairement à la direction d'imbrication D.

Les avantages de l'ensemble 100 sont analogues à ceux de l'ensemble 10, avec notamment une séparation facile des cellules 12, 14, 16 dans la direction d'imbrication D dès lors que la pression F n'est plus appliquée.

En outre, l'obtention de l'ensemble 100 ne nécessite pas de soudure entre le couvercle 132 et le corps 26 dans les cellules 12, 14, 16.

## Revendications

1. Ensemble (10; 100) comprenant une pluralité de cellules (12, 14, 16) structurellement analogues les unes aux autres et adaptées pour être imbriquées l'une dans l'autre successivement dans une direction d'imbrication (D), chacune des cellules (12, 14, 16) comprenant :
- un empilement électrochimique (18) comportant un premier pôle (20) et un deuxième pôle (22),
- un boîtier (24) comprenant un corps (26) électriquement conducteur définissant un premier logement (28) adapté pour recevoir l'empilement électrochimique (18) dans la direction d'imbrication (D) et définissant une ouverture de passage (30) pour l'empilement électrochimique (18) vers le premier logement (28), le boîtier (24) comprenant en outre un couvercle (32 ; 132) retenu par un rebord (34 ; 134) du corps (26) pour obturer au moins partiellement l'ouverture de passage (30), et
- au moins un premier élément isolant (36 ; 136) adapté pour isoler électriquement du corps (26) au moins une portion (38 ; 138) électriquement conductrice du couvercle (32 ; 132),
le premier pôle (20) et le deuxième pôle (22) étant reliés électriquement au corps (26) et à ladite portion (38 ; 138) respectivement,
chacune des cellules (12, 14, 16) formant un deuxième logement (44) ouvert adapté pour recevoir une autre des cellules (12, 14, 16) selon la direction d'imbrication (D) dans une position insérée, dans laquelle un fond (42) du corps (26) de l'autre des cellules (12, 14, 16) bute contre et est en contact électrique avec ladite portion (38 ; 138) du couvercle (32 ; 132) de ladite chacune des cellules (12, 14, 16), le deuxième logement (44) étant adapté pour empêcher un glissement dudit fond (42) par rapport à ladite portion (38 ; 138) dans toute direction perpendiculaire à la direction d'imbrication (D),
chacune des cellules (12, 14, 16) comprenant en outre au moins un deuxième élément isolant (40 ; 140) adapté pour empêcher un contact électrique entre ledit fond (42) et le rebord (34 ; 134).

2. Ensemble (10 ; 100) selon la revendication 1, dans lequel le boîtier (24) présente une forme générale parallélépipédique.

3. Ensemble (10 ; 100) selon la revendication 1, dans lequel le corps (26) est au moins quatre fois plus étendu que le couvercle (32 ; 132) dans la direction d'imbrication (D).

4. Ensemble (10 ; 100) selon l'une quelconque des revendications 1 à 3, dans lequel le corps (26) comprend des parois latérales (56) reliant le rebord (34 ; 134) au fond (42), le rebord (34 ; 134) comprenant une première partie (58) et une deuxième partie (60), la première partie (58) reliant les parois latérales (56) à la deuxième partie (60) en formant un épaulement dans la direction d'imbrication (D).

5. Ensemble (10) selon la revendication 4, dans lequel le couvercle (32 ; 132) forme un bord relevé (64) s'étendant parallèlement à la deuxième partie (60).

6. Ensemble (10) selon la revendication 5, dans lequel le couvercle (32) comprend ladite portion (38) électriquement conductrice, une autre portion (62) située dans le prolongement de ladite portion (38) électriquement conductrice perpendiculairement à la direction d'imbrication (D), et le bord relevé (64), le premier élément isolant (36) s'étendant entre la portion (38) électriquement conductrice et l'autre portion (62).

7. Ensemble (10) selon la revendication 6, dans lequel le bord relevé (64) du couvercle (32) est soudé sur le rebord (34).

8. Ensemble (10) selon la revendication 6 ou 7, dans lequel le deuxième élément isolant (40) comprend, en section perpendiculairement au rebord (34), une partie (66) en « L » disposée entre, d'une part, l'autre portion (62) du couvercle (32) et le bord relevé (64) et, d'autre part, le corps (26) de l'autre des cellules (12, 14, 16).

9. Ensemble (10) selon l'une quelconque des revendications 6 à 8, dans lequel le deuxième élément isolant (40), en section perpendiculairement au rebord (34), recouvre une extrémité (68) du bord relevé (64) du couvercle (32), et une extrémité (70) de la deuxième partie (60) du rebord (34) dans la direction d'imbrication (D).

10. Ensemble (100) selon la revendication 5, dans lequel le rebord (134) comprend, en section perpendiculairement au rebord (134), une troisième partie (162) en « L », la base (164) du « L » étant fixée sur la deuxième partie (60), la hampe (166) du « L » s'étendant entre le bord relevé (64) du couvercle (132) et le corps (26) de ladite autre des cellules (12, 14, 16), la deuxième partie (60) et la troisième partie (162) encapsulant le bord relevé (64) et le premier élément isolant (136).

11. Ensemble (100) selon la revendication 10, dans lequel le deuxième élément isolant (140) est venu de matière avec le premier élément isolant (136).

12. Ensemble (100) selon la revendication 10 ou 11, dans lequel le deuxième élément isolant (140) comprend, en section perpendiculairement au rebord (134):
- une première portion (176) recouvrant au moins partiellement la base (164) du « L » formé par la troisième partie (162) du rebord (134), et
- une deuxième portion (178) s'étendant entre la hampe (166) du « L » formé par la troisième partie (162) du rebord (134) et le corps (26) de ladite autre des cellules (12, 14, 16).

13. Ensemble (100) selon l'une quelconque des revendications 10 à 12, dans lequel, en section perpendiculairement au rebord (134), le premier élément isolant (136) comprend successivement une première portion (170) s'étendant entre la première partie (58) du rebord (134) et la portion principale (168) du couvercle (132), une deuxième portion (172) s'étendant entre la deuxième partie (60) du rebord (134) et le bord relevé (64) du couvercle (132), et une troisième portion (174) s'étendant entre la troisième partie du rebord (162) et le bord relevé (64).

14. Procédé d'obtention d'un ensemble (10 ; 100) selon l'une quelconque des revendications 1 à 13, comprenant les étapes suivantes :
- pour chacune des cellules (12, 14, 16), réception de l'empilement électrochimique (18) dans le premier logement (28), et raccordement du premier pôle (20) et du deuxième pôle (22) électriquement au corps (26) et à ladite portion (38 ; 138) du couvercle (32 ; 132) respectivement,
- pour chacune des cellules (12, 14, 16), rétention du couvercle (32 ; 132) par le rebord (34 ; 134), obturation au moins partielle de l'ouverture de passage (30) par le couvercle (32 ; 132), et mise en place du deuxième élément isolant (40 ; 140), et
- imbrication des cellules (12, 14, 16) l'une dans l'autre successivement dans la direction d'imbrication (D), le fond (42) du corps (26) d'une des cellules (12, 14, 16) butant contre et étant en contact électrique avec ladite portion (38 ; 138) du couvercle (32 ; 132) d'une autre des cellules (12, 14, 16), le deuxième logement (44) de l'autre des cellules (12, 14, 16) empêchant un glissement dudit fond (42) de ladite une des cellules (12, 14, 16) par rapport à ladite portion (38 ; 138) du couvercle (32 ; 132) de l'autre des cellules (12, 14, 16) dans toute direction perpendiculaire à la direction d'imbrication (D).

15. Utilisation d'un ensemble (10 ; 100) selon l'une quelconque des revendications 1 à 13, dans laquelle une pression mécanique (F) comprise entre 0,5 et 3,0 bar est appliquée sur l'ensemble (10 ; 100) dans la direction d'imbrication (D) pour maintenir une cohésion de l'ensemble (10 ; 100).
